# EUROPEAN PATENT APPLICATION

(11) **EP 2 138 970 A1**
(43) Date of publication of application: **30.12.2009**
(21) Application number: 08104545.2
(22) Date of filing: 26.06.2008
(51) Int. Cl.: G06Q 30/00

(54) **Ordering scheme**

(71) Applicant: Nokia Siemens Networks Oy, 02610 Espoo (FI)
(72) Inventor: The designation of the inventor has not yet been filed
(74) Representative: Bruglachner, Thomas E.

(57) **Abstract**

An ordering scheme is described, for example an ordering and payment scheme for mobile communication devices. The ordering scheme enables an Internet shop or another service provider to issue binding offers to a mobile communication device or the like and to receive an acceptance of the offer from the mobile device. The acceptance is encrypted using a private key of mobile device and the offer may be encrypted using a private key of the service provider. The service provider liaises with a payment broker and a charging system for controlling the transfer of funds from the user to the service provider. An identity management system may be provided to control access to the modules of the ordering scheme.

## Description

The present invention relates to an ordering scheme, such as, for example, an ordering and payment scheme for mobile communication devices.

Remote shopping has expanded enormously in recent years. For example, Internet shopping has become commonplace. Shopping orders sent from mobile communication devices, such as mobile telephones are also becoming commonplace.

A first problem with remote shopping, such as Internet shopping, is providing both service/product providers and end consumers with proof of actions taken. For example, if a product is not delivered, a consumer will wish to prove that an order was made and that payment was made. If a consumer makes an order but the payment is less than agreed, the service or product provider will want to prove the terms of the agreement made.

A second problem with remote shopping is privacy. Consumers are reluctant to provide service and product providers with secure information such as full names, addresses, credit card details and passwords. This is particularly true when the provider is not a well known and trusted brand.

Furthermore, although it is known for telecommunication services operators to provide pre-paid systems and other charging services systems to their customers, in general, these charging systems are restricted to services provided by the particular telecommunication service operator. Although telecommunication service operators have the technical capability to provide financial services to third party service providers, implementing such systems has proved difficult. One problem is that each third party service provider needs to establish technical and contractual relationships with every operator's services. This leads to highly complex and costly infrastructure. Part of this infrastructure relates to dealing with the issues of security and user privacy.

The present invention seeks to address at least some of the problems outlined above.

The present invention provides a method comprising the steps of: a service provider (such as an Internet shop) issuing an offer to a user device (such as a computer or a mobile communication device), wherein the offer comprises a first message including information (such as product/service descriptions and prices) relating to an item being offered; and the user device sending an acceptance of the offer to the service provider, wherein the acceptance comprises a second message and wherein the acceptance is encrypted using a private key of the user device. The service provider may then validate that the acceptance was signed by the user device (using the public key of the user device).

The present invention also provides a system comprising a service provider (such as an Internet shop) and a user device (such as a computer or a mobile communication device), wherein: the service provider is configured to issue an offer to the user device, wherein the offer comprises a first message including information (such as product/service prices and descriptions) relating to an item being offered; and the user device is configured to send an acceptance of the offer to the service provider, wherein the acceptance comprises a second message and wherein the second message is encrypted using a private key of the user device. The service provider may then validate that the acceptance was signed by the user device (using the public key of the user device).

The sending of an encrypted acceptance of the offer from the user device to the service provider provides the service provider with cryptographically secure evidence that the order was made by an authorised customer. The evidence is strong and secure since only the user device should know the relevant private key. As discussed further below, the service provider may not know the identity of the user, but should know that the user was authenticated and the user should be identifiable to the relevant network operator (e.g. via a pseudonym). In the absence of such evidence, the service provider might have to show his own log files to convince a third party that an order was made and also prove that the log files reflected what the user actually did.

In some forms of the invention, the first and second messages are the same so that, in order to accept the offer, the user device simply encrypts the first message and sends the encrypted message back to the service provider.

The offer may be encrypted; for example the first message may be encrypted using the private key of the service provider. Thus, the sending of the offer from the service provider to the user device provides the user with cryptographically secure evidence that the offer was made and the terms of which the offer was made (e.g. the price). The evidence is strong and secure since only the service provider should know the relevant private key.

The order information received from the user device may be sent from the service provider to a payment broker. In some forms of the invention, the order information is sent directly from the service provider to the payment broker, either encrypted using the service provider's private key or with the user's private key. In other embodiments of the invention, the order information is sent from the service provider to the payment broker via the user equipment; again, the order information could be encrypted with either the service provider's private key or the user's private key.

In many forms of the invention in which order information is sent to the payment broker, the information sent to the payment broker contains less than the information included in the offer. In particular, in many forms of the invention, data concerning the goods or services being purchased are not included. The reasoning behind this is that the payment broker does not need to know the nature of the goods or services involved when determining whether or not payment should be made. Given that this data is not needed, it is preferable not to include such data in messages to the payment broker, both in terms of data minimisation and in terms of user privacy.

In some forms of the invention, the order messages sent between the service provider and the user equipment include first and second portions, wherein the second portion is for sending to the payment broker, but the first portion is not for sending to the payment broker.

By way of example, the offer data sent from the service provider to the user equipment may include at least some of: a pseudonym of the user, an identifier of the service provider, prices and descriptions of the goods and/or services being offered, the current time and a nonce, which data may be encrypted using the private key of the service provider. The acceptance from the user equipment to the service provider may contain the same data, although this data may be encrypted using the private key of the user equipment. The data sent to the payment broker may omit the data concerning the goods and/or services.

By way of further example, the offer data sent from the service provider to the user equipment may include at least some of: a pseudonym of the user, an identifier of the service provider, prices and descriptions of the goods and/or services being offered, and the total price of all of the goods and/or services in question. The acceptance from the user equipment to the service provider may contain the same data, although this data may be encrypted using the private key of the user equipment. The data sent to the payment broker may omit the data and prices of the individual goods and/or services.

In some forms of the invention, payment data is sent to a charging service. In many forms of the invention in which payment information is sent to the charging service, the information sent to the charging service contains less than the information included in the offer and/or the information sent to the payment broker. In particular, in many forms of the invention, data concerning the goods or services being purchased are not included and data identifying the service provider are not included. The reasoning behind this is that the charging service does not need to know either the nature of the goods or services involved, or the service provider in question when determining whether or not payment should be made.

In some forms of the invention, three separate messages are generated, a first message forming the offer made by the service provider, a second message for sending to the payment broker and a third message for sending to the charging service. In one form of the invention, the first, second and third messages are generated at the service provider. Each of the three messages may be separately encrypted using the service provider's private key.

The first message may comprise a pseudonym of the user, an identifier of the service provider, prices and descriptions of the goods and/or services being offered, and the total price. Alternatively, the first message may comprise a pseudonym of the user, an identifier of the service provider, price and descriptions of the goods and/or services being offered, the current time and a nonce. Other message formats are also possible.

The second message may comprise a pseudonym of the user, an identifier of the service provider, and the total price. Alternatively, the second message may comprise a pseudonym of the user, an identifier of the service provider, prices of the goods and/or services being offered, the current time and a nonce. Other message formats are also possible.

The third message may comprise a pseudonym of the user and the total price. Alternatively, the third message may comprise a pseudonym of the user, prices of the goods and/or services being offered, the current time and a nonce. Other message formats are also possible.

In one form of the invention, the payment broker determines whether the payment is in accordance with a credit limit of the user. The order details may include the credit limit of the user. In one form of the invention, the credit limit is provided by an identity provider. The credit limit, if provided, may be encrypted using the public key of the payment broker so that only the payment broker can view the credit limit data.

The payment broker may validate that the data sent to it was sent by the service provider by decrypting the data using the service provider's public key. It should be noted that this step can be carried out regardless of whether the data is received directly from the service provider or via the user equipment since, in either case, the data can be encrypted at the service provider using the private key of the service provider. Alternatively, the verification that the data sent to the payment broker was signed by the service provider could be carried out by another module, such as the identity management system. In alternative forms of the invention, the data sent to the payment broker might be encrypted using the private key of the identity management system or the user equipment, in which case the payment broker would need to decrypt that data using the appropriate public key.

The payment broker may confirm receipt of the order data to the service provider. The receipt may be encrypted using the payment broker's private key. The service provider may issue a payment receipt to the user equipment, for example encrypted using the service provider's private key.

In one form of the invention, the payment broker encrypts the order information using a private key of the payment broker and sends the encrypted order information to an identity management system. Further, the encrypted order information may be sent from the payment broker to the identity management system via the user equipment.

In one form of the invention, the identity management system authenticates both the payment broker and the user equipment from which the encrypted order information is sent. If both the payment broker and the user equipment are authenticated, the identity management system may inform a charging system that payment is to be made. Alternatively, or in addition, if both the payment broker and the user equipment are authenticated, a payment receipt may be sent to the user equipment. In an alternative form of the invention in which the order information is sent directly from the payment broker to the identity management system, the identity management system may merely authenticate the payment broker (and not also the user equipment).

In many forms of the invention, a payment receipt is issued to the user when payment has been confirmed. This payment receipt may be encrypted, for example using the private key of the service provider. The service provider may send both an order receipt and a payment receipt to the user, either or both of which may be encrypted using the service provider's private key. The order and payment receipts may be sent together or separately.

Of course, the present invention may also comprise means for fulfilling any order made, such as a logistics operation associated with the service provider. Such a logistics operation may receive signed messages in a similar manner to other modules of the systems described herein.

The present invention may also provide an arrangement for enabling a user to log in to the service provider. By way of example, a single-sign-on arrangement under the control of the identity management system may be provided.

The present invention will now be described, by way of example only, with reference to the following numbered drawings.
Figure 1 is a block diagram of a system in accordance with a first aspect of the present invention;
Figure 2 is a flow chart demonstrating an algorithm in accordance with an aspect of the present invention;
Figure 3 demonstrates a sequence of messages in accordance with an aspect of the present invention;
Figure 4 is a flow chart showing further details of the algorithm of Figure 2;
Figure 5 is a block diagram of a system in accordance with a further aspect of the present invention;
Figure 6 is a flow chart demonstrating an algorithm in accordance with an aspect of the present invention; and
Figure 7 demonstrates a sequence of messages in accordance with an aspect of the present invention.

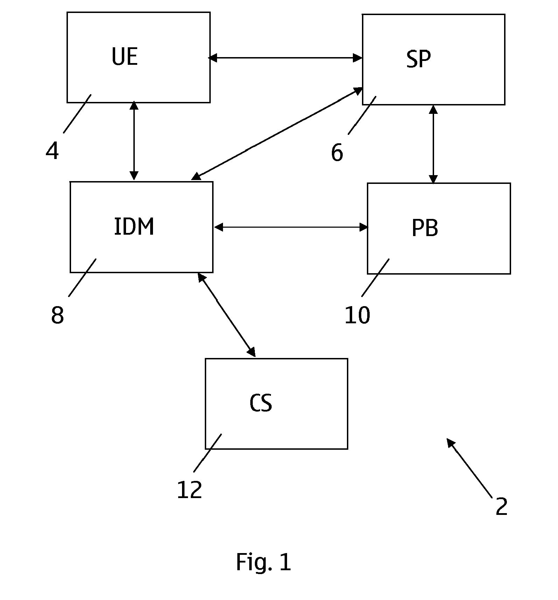

Figure 1 shows a system, indicated generally by the reference numeral 2, in accordance with an aspect of the present invention. The system 2 comprises user equipment 4 (such as a computer or a mobile communication device), a service provider 6 (such as an internet shop), an identity management system 8, a payment broker 10, and a charging system 12 (such as a telecommunication service operator's charging system).

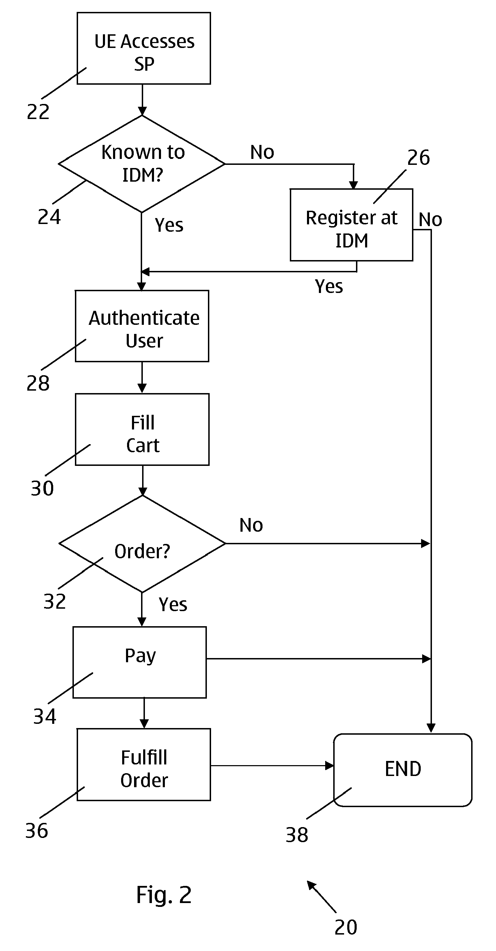

Figure 2 is a flow chart showing an exemplary algorithm, indicated generally by the reference numeral 20, for enabling a user using user equipment 4 to purchase products or services from the service provider 6 and to pay for those products/services via the payment broker 10 and the charging system 12.

The algorithm 20 starts at step 22, where the user attempts to access the service provider 6 using user equipment 4. In response, the algorithm 20 moves to step 24, which step asks if the user is known to the identity management system (IDM) 8. If the user is known, he is authenticated at step 28. If the user is unknown, the algorithm moves to step 26, at which point the user is asked to register with the IDM 8. If the user successfully registers at the IDM, the algorithm 20 moves to step 28 where the user is authenticated; otherwise, the algorithm terminates at step 38.

From step 28, the algorithm 20 moves to step 30, where the user makes purchases at the service provider, for example by filling an online shopping cart in a manner well known in the art.

Once the user has finished shopping, an order is generated and the user is asked, at step 32, to confirm the order. If the order is confirmed, the algorithm 20 moves to step 34. Otherwise, the algorithm 20 terminates at step 38.

At step 34, the user seeks to pay for the confirmed order.
If the payment is successful, the order is fulfilled at step 36 and the algorithm 20 terminates at step 38. If the payment step 34 is unsuccessful, step 36 is omitted and the algorithm 20 terminates at step 38.

The various elements of the algorithm 20 are described in more detail below. At this stage it should be noted that the algorithm 20 as described herein assumes that the user is logged onto the Internet by a device with a browser and decides to use a pseudonym (registered with the identity management system 8) to shop on the Internet, visiting one or more service providers 6 to do so. The charging system 12 is partnered in some way with the identity management system 8. The identity management system 8, service provider(s) 6 and payment broker 10 each own a private and public key pair for signing their messages and have published their public key to enable verification of their signature by the receivers of the messages for proving the origin of the messages.

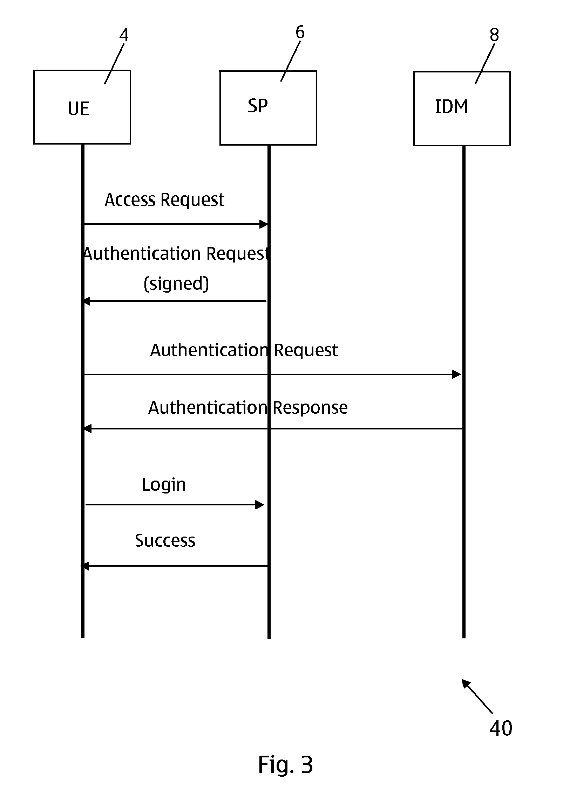

Figure 3 shows an exemplary message sequence, indicated generally by the reference numeral 40, between user equipment 4, service provider 6 and identity management system 8. The message sequence 40 is an exemplary implementation of the steps 22, 24 and 28 of the algorithm 20.

First, the user equipment 4 seeks to access the service provider 6 by issuing an access request. At this stage, the user equipment has not logged into the service provider 6, so the service provider issues an authentication request to the user equipment. The authentication request is signed using the service provider's private key. The authentication request is forwarded by the user equipment 4 to the identity management system 8 together with a session cookie for authenticating the user, if such a cookie has previously been stored at the user equipment. These steps can be carried out automatically when the user attempts to access the service provider 6, thereby implementing a single-sign-on algorithm.

If the user is known to the identity management system 8, then the identity management system sends an authorisation message to the user equipment 4 for forwarding by the user equipment to the service provider 6. The user equipment 4 forwards the authorisation to the service provider 6 and the service provider allows the user equipment access to the service provider and confirms this by forwarding a success message to the user equipment.

In the event that the user equipment 4 is unknown to the identity management system, then the step 24 of algorithm 20 is answered in the negative and the algorithm moves to step 26. A variety of methods are known for enabling the user equipment to be registered with the identity management system. For example, the following exemplary process could be used:
1. The user equipment 4 generates an RSA private/public key pair;
2. The public key of the user equipment 4 is sent to the identity management system 8;
3. The identity management system 8 asks the user to provide its credentials;
4. The user provides the required credentials (e.g. user-name and password) via the user equipment 4;
5. The identity management system 8 recognises the user credentials and responds by sending a session cookie to the user equipment for use in later authentication.

Other mechanisms are known and could be used for registering the user equipment 4 with the identity management system 8.

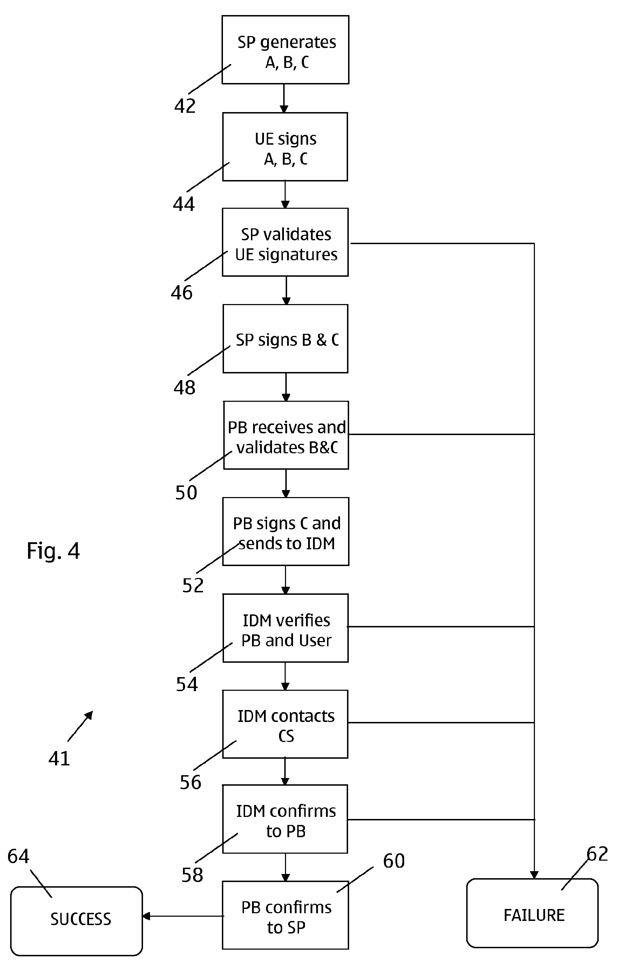

Figure 4 is a flow chart showing an exemplary algorithm, indicated generally by the reference numeral 41, for carrying out the steps 32 and 34 of the algorithm 20. Thus, before the algorithm 41 starts, the user has already selected items to be purchased (step 30).

The algorithm 41 starts at step 42 at which point the service provider generates three messages (for example open Trans encoded XML messages, although other message formats could, of course, be used) containing the payment information, the pseudonym of the user and details of the products/services that have been ordered. These messages are referred to below as Order A, Order B and Order C and include the following data:
Order A: Srv, ps, g, p, t;
Order B: Srv, ps, t;
Order C: ps, t.
Where:
- Srv identifies the service provider;
- ps is the pseudonym of the user;
- g is a description of the goods or service, or an article number;
- p is the price of the individual goods or services in question; and
- t is the total price for the goods and services ordered

Thus, as discussed further below, the message Order B omits the description and price of the goods and services in question that are included in Order A and the message Order C further omits the details of the service provider included in the messages Order A and Order B.

The service provider 6 generates a confirmation page including details of the order that is sent to the user, together with the messages Order A, Order B and Order C. The confirmation page represents a binding offer (possibly of limited duration) made by the service provider to the user. The confirmation page presents the user with a dialogue box asking the user to confirm that the order should be processed. Confirmation by the user (step 44 of the algorithm 41) results in the messages Order A, Order B and Order C being signed by the private key of the user equipment. Such confirmation represents a binding acceptance by the user of the service provider's offer.

The encrypted messages are sent back to the service provider 6. The service provider 6 then validates the user's signature for each of the three messages (step 46) using the public key of the user equipment. If the user's signatures are validated, then algorithm moves to step 48; otherwise, the algorithm 41 terminates at step 62.

At step 48, the service provider cryptographically signs the messages Order B and Order C with its private key and forwards the appropriate messages to the user equipment 4 which, in turn, forwards the encrypted messages to the payment broker 10.

The payment broker 10 receives the encrypted messages Order B and Order C from the user equipment 4 and validates the messages using the public key of the service provider (step 50). If the service provider's signature is validated, then the algorithm 41 moves to step 52; otherwise, the algorithm 41 terminates at step 62. (It should be noted that in an alternative form of the invention, the encrypted messages Order B and Order C are sent to the payment broker via the identity management system 8: in such an arrangement, the identity management system may verify the signatures of the messages Order B and Order C rather than the payment broker 10.)

At step 52, the payment broker 10 signs the message Order C using its private key and sends the encrypted message to the identity management system 8 via the user equipment 4.

At step 54, the identity management system 8 checks that the message Order C was signed by the payment broker 10 (using the public key of the payment broker) and also authenticates the user whose browser is transporting the payment request. If both the payment broker and the user are verified, the algorithm 41 moves to step 56; otherwise, the algorithm 41 terminates at step 62.

At step 56, the identity management system 8 contacts the charging system 12 to deduct the requested amount from the user's account at the charging system. If the charging system confirms that this has taken place, the algorithm moves to step 58; otherwise, the algorithm terminates at step 62.

At step 58, the identity management system generates a signed confirmation of payment and sends this to the payment broker. The payment broker 10 verifies the signature of the identity management system using the public key of the identity management system. If the signature is verified, the algorithm 41 moves to step 60; otherwise the algorithm, 41 terminates at step 62.

At step 60, the payment broker 10 triggers the transfer of the confirmed sum to the service provider's account and sends a receipt to the shop. The algorithm then moves to step 64, where a success message is sent to the user equipment 4 and the order is fulfilled.

Thus, the algorithm 41 generates a binding offer by a service provider to a user at step 42 and a binding acceptance by the user at step 44. The user obtains (and can retain for evidence purposes) an encrypted version of the offer and the service provider can similarly retain an encrypted version of the acceptance. Encrypted order data is transferred between the service provider, payment broker, identity management system and charging system. The data that is sent is restricted so that the payment broker receives no data concerning the goods or services ordered or the price of individual items (only an overall price) and the charging system receives only the pseudonym of the user and the total amount of money to be transferred.

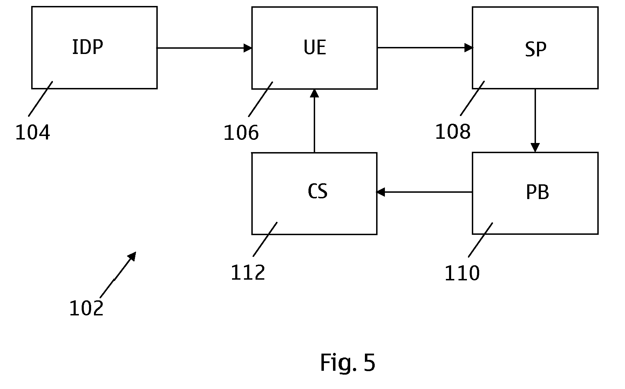

A second embodiment of the invention is described below with reference to Figures 5 to 7.

Figure 5 shows a system, indicated generally by the reference numeral 102, in accordance with an aspect of the invention. The system 102 comprises an identity provider 104, user equipment 106, a service provider 108, a payment broker 110 and a charging system 112 (such as a network operator).

The service provider 108 provides products or services which may be of interest to the user. In the event that the user wishes to make a purchase from the service provider 108, the user equipment 106 is authenticated by the identity provider 104 and, if this authentication procedure is accepted by the service provider 108, the product or service is sold to the user.

The service provider 108 obtains payment for the products or services sold by sending the relevant data to the payment broker 110. The payment broker 110 in turn liaises with the charging service 112 which recovers payment from the user, for example by charging the user by means of a telephone bill.

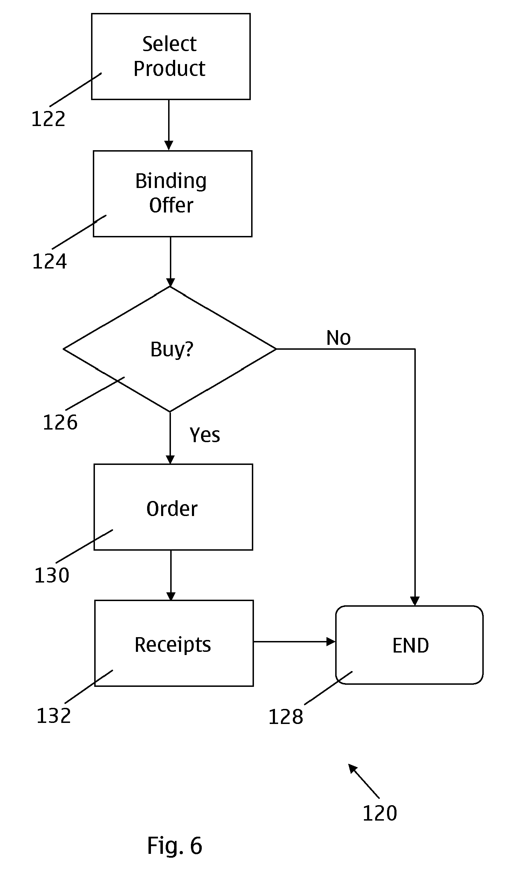

Figure 6 shows an algorithm 120 in accordance with the second embodiment of the present invention.

The algorithm 120 starts at step 122 at which step the user equipment 106 selects products or services provided by the service provider 108 that are of interest to the user. Next, the algorithm moves to step 124 at which point a binding offer relating to the selected products and/or services is sent from the service 108 to the user 106. As described further below, the offer is cryptographically protected, for example by signing it with a private key.

The algorithm then moves to step 126, at which point the user equipment asks the user to indicate whether or not the offer is accepted, i.e. whether the products and/or services should be purchased. If the user equipment 106 indicates that the products and/or services should not be purchased, the algorithm 120 terminates at step 128. If the user equipment 106 indicates that the products and/or services should be purchased, the algorithm 120 moves to step 130.

At step 130, the user equipment sends a cryptographically protected order to the service provider 108. As described further below, the user may also send additional fields, which may also be cryptographically secure, but which contain less information than the complete order. The service provider 108 can then forward the relevant data to the payment broker 110 and/or the charging system 112 to prove that the user indeed ordered an item. This process can be arranged to protect the user's privacy by omitting information relating to the identity of the user, as described further below.

Once the order has been sent at step 130, the algorithm 120 moves to step 132, at which point cryptographically protected order and payment receipts are sent from the service provider 108 to the user 106. Depending on the message flow in any particular embodiment of the invention, the order and payment receipts may either be sent separately or together. Once receipts have been issued, the algorithm 120 terminates at step 128.

Before any orders made by the user equipment 106 can be processed in the system 102, trust must be established between the elements of the system 102. It is initially assumed that the identity provider 104, service provider 108, payment broker 110 and charging system 112 use certificates with a common root certificate authority (CA) or, at least, that all these elements of the system 102 have certificates signed by certificate authorities which are recognised by all elements in the system.

The user 106 can generate credentials, such as public/private key pairs and pseudonyms and ask the identity provider 104 to certify them. It is assumed that users already have other credentials to authenticate themselves towards the identity provider. Possible credentials include passwords and shared secrets stored on SIM cards or UICC. An advantage of this mechanism is that users can change their credentials regularly. Since all user activities done with the same set of credentials can be linked because of unique user IDs or unique keys contained in the credentials, changing the credentials regularly prevents service providers from tracking users over longer periods of time.

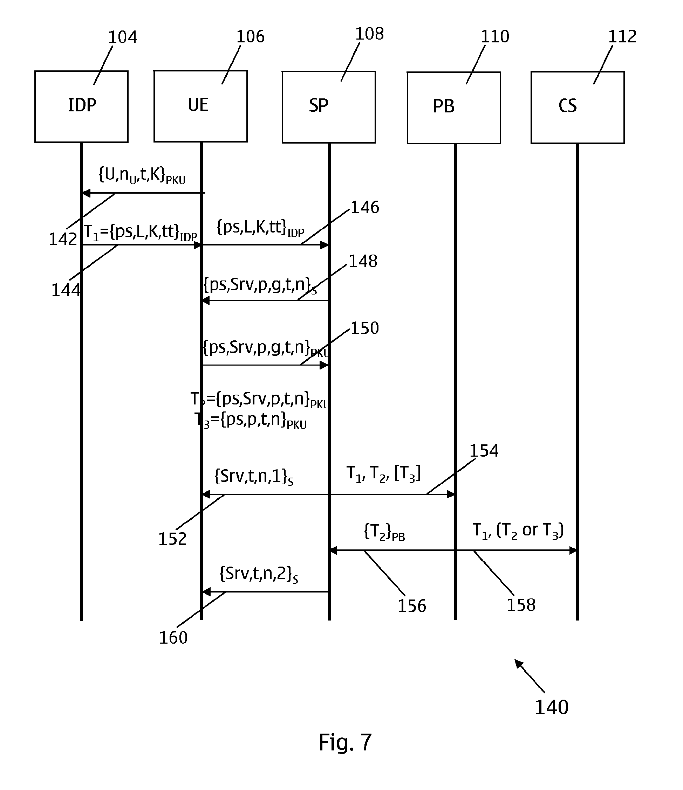

Figure 7 shows a sequence of messages, indicated generally by the reference numeral 140, in an exemplary embodiment of the present invention. The sequence 140 shows messages sent between the identity provider 104, user equipment 106, service provider 108, payment broker 110 and charging system 112.

It is assumed that prior to the message flow shown in Figure 7, the user equipment 106 has created a private/public key pair (PKU, K) and that the identity provider 104 has securely received or verified the credit limit (L) of the user and has created or verified a pseudonym for the user (ps).

The first message, indicated by the reference numeral 142, is sent from the user equipment 106 to the identity provider 104 and is as follows: {U, n_{U}, t, K}_{PKU}, where:
- U identifies the user;
- n_{U} is a nonce (number used once) relating to the user;
- t is a timestamp;
- K is the public key of the user; and
- PKU is the private key of the user.

The message 142 is sent to enrol the user 106 and his public key K with the identity provider; this only needs to be done once for each user. To authenticate, the user 106 uses the credentials he already has (not shown). In this arrangement, the identity provider 104 already knows the public key of the user equipment 106 and can therefore decrypt the message 142.

The second message 144 is a token T₁ sent from the identity provider 104 to the user equipment 106. The token T1 is as follows: {ps, L, K, tt}_{IDP}, where:
- ps is a pseudonym of the user (e.g. xyz@NO);
- L is the current credit limit of the user (possibly encrypted with the payment broker's public key);
- K is the public key of the user;
- tt is the maximal validity time for the token; and
- IDP is the private key of the identity provider.

The token T₁ is sent by the user to the service provider 108 (message 146). Thus, the service provider 108 receives an encrypted message containing the pseudonym of the user, the user's credit limit, the public key of the user and the maximal validity time for the token. The service provider 108 knows the public key of the identity provider 104 and is therefore able to decrypt the message 146.

In response, the service provider sends a message 148, which defines a binding offer being made by the service provider to the user (thereby implementing step 124 of the flow chart 120). The message 148 reads as follows: {ps, Srv, p, g, t, n}_{S}, where:
- ps is the pseudonym of the user;
- Srv identifies of the service provider;
- p is the price of the goods or services in questions;
- g is a description of the goods or service, or an article number;
- t is the current time;
- n is a nonce; and
- S is the private key of the service provider.

In the message 148, the service provider 108 sends a confirmation of the offer being made, asks the user for authorisation and challenges him for proof of possession of the token T₁ of the second message 146. The user equipment 106 knows the public key of the service provider and is therefore able to decrypt the message 148.

In response, the user equipment 106 sends a message 150 to the service provider 108. The message 150 is as follows: {ps, Srv, p, g, t, n}_{PKU}, where PKU is the private key of the user (i.e. the confirmation of the order 148 is decrypted by the user equipment and then simply encrypted again using the user equipment's private key). In this way, the user equipment 106 accepts the offer (thereby completing the step 130 of the flowchart 120) by signing the detailed transaction information with his private key PKU.

In addition to sending the message 150, including the detailed transaction information, the user 106 also sends a token T₂ to the service provider 108. The token T₂ is as follows: {ps, Srv, p, t, n}_{PKU}. Thus, the token T₂ omits details of the product or service ordered.

Alternatively, or in addition, the user may send a token T₃ to the service provider. The token T₃ is as follows: {ps, p, t, n}_{S}. Thus, the token T₃ omits both information regarding the products or services ordered and information regarding the service provider 108.

When the service provider receives the message 150, a message 152 is sent from the service provider 108 to the user 106. The message 152 is as follows: {Srv, t, n, 1}_{S}. The message 152 serves as an order receipt, thereby implementing part of the step 132 of the flowchart 120.

With the order confirmed, the service provider 108 sends a message 154 to the payment broker 110. The message 154 comprises the tokens T₁ and T₂, and optionally also includes the token T₃. On receipt of the tokens T₁ and T₂. the payment broker checks whether the user (identified by his pseudonym ps) is still within his credit limit. To do this, the payment broker 110 may maintain a list of payments made on behalf of this user. If the outcome of this test is positive (or the token T₁ does not contain a credit limit at all), the payment broker sends a payment receipt to the service provider 108. In the exemplary message sequence 140, this payment receipt takes the form of a message 156 comprising the token T₂ encrypted using the private key of the payment broker 110.

The payment broker 110 also informs the charging system 112 about the payment by sending either token T₂ or T₃ to the network operator (message 158). (Sending token T₃ may be preferred as it omits information about the service provider, thereby limiting the information sent to the charging system 112 solely to the information that the charging system needs to know in order to complete the order.) The billing service of the charging system 112 can then bill the user and possibly adjust the user's remaining credit limit.

Finally, when the service provider has received the message 156 confirming payment, a message 160 is sent from the service provider to the user. The message 160 is as follows: {Srv, t, n, 2}_{S}. The message 160 is an encrypted payment receipt, thereby completing step 132 of the flowchart 120.

Thus, the user receives a message (message 148) encrypted using the service provider's private key that can be used as proof that the service provider offered a product or service under certain conditions (including price).

Further, the service provider receives a message (message 150) encrypted using the user's private key that can be used as proof that the user ordered a particular product or service.

Furthermore, the user receives messages (messages 152 and 160) encrypted using the service provider's private key that can be used as proof that the service provider confirmed receipt of the order and that the service provider confirmed receipt of payment.

As discussed above, the present invention includes the transmission of credit limits. The credit limit of a user may be part of the token issued by the identity provider. If present, it informs the service provider or the payment broker about the maximum amount this user can spend in a certain time frame. If for privacy reasons the service provider should not be able to read the credit limit, it can be encrypted with the public key of the payment broker. Depending on the details of the protocol, the service provider or the payment broker can check that the user still is within his credit limit, which implies that the network operator is guaranteed to pay the service provider for the current transaction. It should be noted that the checking of the credit limit by the service provider may have consequence on the lifetime of the assertion containing the credit limit.

The algorithm 120 described above takes a number of steps to protect the user's privacy. In the algorithm 120, the payment broker 110 needs to know the amount of money to be transferred, but does not need to know the products or services or type of products or services being ordered by the user equipment 106. Thus, the tokens T₂ and T₃ do not include information relating to the products. On the other hand, the service provider 108 needs to know, say, the IP address of the user, but not the identity of the consumer. Accordingly, the service provider is sent the pseudonym ps, rather than the user details U.

The arrangement of Figure 5 shows a single identity provider 104, user equipment 106, a service provider 108, a payment broker 10 and charging system 112. Of course, in many implementations of the invention, there may be more than one of these elements of the system 102. For example, many implementations of the system 102 will include several identity providers 104, several payment brokers 110, several charging systems 112, many service providers 108 and very many users 106. Similarly, the arrangement of Figure 1 may include several identity management systems 8, several payment brokers 10, several charging systems 12, many service providers 6 and very many user equipments 4.

The present invention has been described above with reference to two detailed embodiments. As would be apparent to the skilled person, features described with reference to one embodiment could be incorporated into the other embodiment. Unless it is not possible to do so, the present invention includes all combinations of the two embodiments.

The embodiments of the invention described above are illustrative rather than restrictive. It will be apparent to those skilled in the art that the above devices and methods may incorporate a number of modifications without departing from the general scope of the invention. It is intended to include all such modifications within the scope of the invention insofar as they fall within the scope of the appended claims.

## Claims

1. A method comprising the steps of:
a service provider issuing an offer to a user device, wherein the offer comprises a first message including information relating to an item being offered; and
the user device sending an acceptance of the offer to the service provider, wherein the acceptance comprises a second message and wherein the acceptance is encrypted using a private key of the user device.

2. A method as claimed in claim 1, wherein the first and second messages are the same.

3. A method as claimed in claim 1 or claim 2, wherein the offer is encrypted using a private key of the service provider.

4. A method as claimed in any preceding claim, further comprising the step of sending order information to a payment broker.

5. A method as claimed in claim 4, wherein the order information sent to the payment broker contains less information that the said offer.

6. A method as claimed in claim 4 or claim 5, wherein the first message includes a first portion and a second portion, wherein the second portion is for sending to the payment broker.

7. A method as claimed in claim 6, wherein the second message includes a first portion and a second portion, wherein the second portion is for sending to the payment broker, and wherein the first and second portions are separately encrypted using the private key of the user device.

8. A method as claimed in any one of claims 4 to 7, further comprising the step of validating that the order information sent to the payment broker was encrypted using the private key of the service provider.

9. A method as claimed in claim 8, further comprising the step of the payment broker encrypting the order information using a private key of the payment broker and sending the encrypted order information to an identity management system.

10. A method as claimed in claim 9, wherein the encrypted order information is sent from the payment broker to the identity management system via the user equipment.

11. A method as claimed in claim 10, wherein the identity management system authenticates both the payment broker and the user equipment from which the encrypted order information is sent.

12. A method as claimed in claim 11, wherein if both the payment broker and the user equipment are authenticated, the identity management system informs a charging system that payment is to be made.

13. A method as claimed in claim 11 or claim 12, wherein if both the payment broker and the user equipment are authenticated, a payment receipt is sent to the user equipment.

14. A system comprising a service provider and a user device, wherein:
the service provider is configured to issue an offer to the user device, wherein the offer comprises a first message including information relating to an item being offered; and
the user device is configured to send an acceptance of the offer to the service provider, wherein the acceptance comprises a second message and wherein the second message is encrypted using a private key of the user device.

15. A system as claimed in claim 14, wherein the service provider is configured to encrypt the first message using a private key of the service provider.

16. A system as claimed in claim 14 or claim 15, further comprising a payment broker, wherein the service provider is configured to send order information to the payment broker.

17. A system as claimed in claim 16, wherein the service provider is configured to omit information regarding the item being purchased from the order information sent to the payment broker.

18. A system as claimed in claim 16 or claim 17, wherein the payment broker is adapted to validate that the order information was sent by the service provider.

19. A system as claimed in any one of claims 14 to 18, further comprising an identity management system, wherein the payment broker is adapted to encrypt the order information using a private key of the payment broker and to send the encrypted order to the identity management system.

20. A system as claimed in claim 19, wherein the identity management system is configured to authenticate both the payment broker and the user equipment from which the encrypted order information is sent.

21. A system as claimed in any one of claims 14 to 20, further comprising means for fulfilling the accepted offer.
